# EUROPEAN PATENT APPLICATION

(11) **EP 4 529 003 A1**
(43) Date of publication of application: **26.03.2025**
(21) Application number: 23866613.5
(22) Date of filing: 16.08.2023
(51) Int. Cl.: H02K 16/00, H02K 1/28, H02K 9/19, H02K 1/20, H02K 5/20

(54) **LAYERED MOTOR**

(30) Priority: 04.08.2023 KR 20230102250
(71) Applicant: Kim, Hong-Hoan, Jeonju-si, Jeollabuk-do 55002 (KR)
(72) Inventor: Kim, Hong-Hoan, Jeonju-si, Jeollabuk-do 55002 (KR)
(74) Representative: Abel & Imray LLP
(86) International application number: PCT/KR2023/012112
(87) International publication number: WO 2025/033586

(57) **Abstract**

Proposed is a layered motor, in which stators (300) are disposed along a circumferential direction inside a housing (100), and rotors (200) are disposed along a circumferential direction adjacent to the stators (300), wherein the rotors (200) are connected to a motor shaft (120) and rotate due to the electromagnetic interaction between the stators (300) and the rotors (200), thereby rotating the motor shaft (120), and the stators (300) and the rotors (200) are disposed in a plurality of layers alternating with each other in the circumferential direction.

## Description

### Technical Field

The present disclosure relates to a motor and, more particularly, to a layered motor in which a stator and a rotor are provided in multiple layers.

### Background Art

In general, a motor includes a stator installed in a state of being fixedly positioned within a housing and a rotor fixed to a motor shaft and positioned adjacent to the stator. When electricity is supplied to such a motor, electromagnetic interaction occurs between the stator and rotor, causing the rotor to be pushed in one direction and, as a result, rotating the motor shaft, thereby obtaining a rotational driving force.

Here, a conventional motor is structured to be provided with only one stator and one rotor. In this case, the diameter of the rotor needs to be increased to increase output, so the size of the motor needs to be increased. Therefore, it is not easy to implement a motor that is small in size but produces high output.

### Disclosure

### Technical Problem

Accordingly, the present disclosure has been made keeping in mind the above problems occurring in the related art, and an objective of the present disclosure is to implement a motor that is configured to be small in size but produce high output.

### Technical Solution

In order to accomplish the above objective, the present disclosure provides a layered motor, in which stators are disposed along a circumferential direction inside a housing, and rotors are disposed along a circumferential direction adjacent to the stators, wherein the rotors are connected to a motor shaft and rotate due to the electromagnetic interaction between the stators and the rotors, thereby rotating the motor shaft, and the stators and the rotors are disposed in a plurality of layers alternating with each other in the circumferential direction.

### Advantageous Effects

As described above, the present disclosure can achieve the same effect as combining several motors into one, whereby a motor provided according to the present disclosure can be smaller in size than a conventional motor but can produce greater output than the same conventional motor. Therefore, it is possible to provide the motor that can be used in various mechanical devices that need to achieve smooth operation through a small motor.

### Description of Drawings

FIG. 1 is an exemplary diagram showing the appearance of a motor according to the present disclosure.
FIG. 2 is an example diagram showing the disposition relationship between stators and rotors in the motor according to the present disclosure.
FIG. 3 is an example diagram showing the coupling relationship between the rotor and the rotating shaft according to the present disclosure.
FIG. 4 is a sectional view showing the rotor according to the present disclosure installed in the housing.
FIG. 5 is an exemplary diagram showing a state in which the stators according to the present disclosure are installed on the stator frames.

### Mode for Invention

The present disclosure proposes a layered motor, in which, to implement the motor that is small in size but produces high output, stators are disposed along a circumferential direction inside a housing, and rotors are disposed along a circumferential direction adjacent to the stators, wherein the rotors are connected to a motor shaft and rotate due to the electromagnetic interaction between the stators and the rotors, thereby rotating the motor shaft, and the stators and the rotors are disposed in a plurality of layers alternating with each other in the circumferential direction.

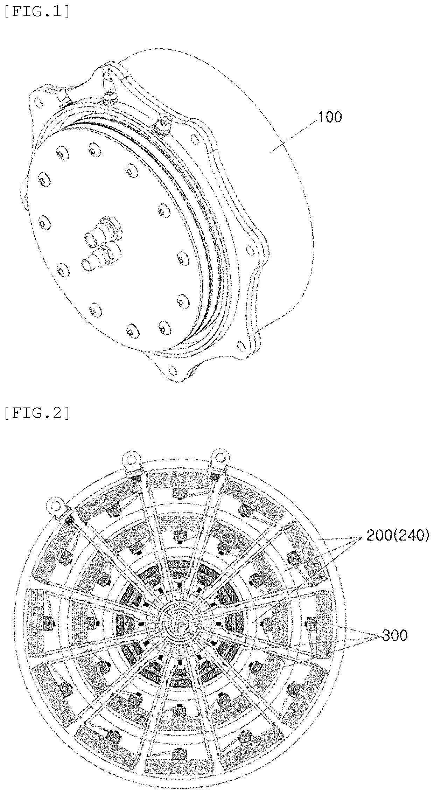

Hereinafter, the present disclosure will be described in detail with reference to the accompanying drawings of FIGS. 1 to 5.

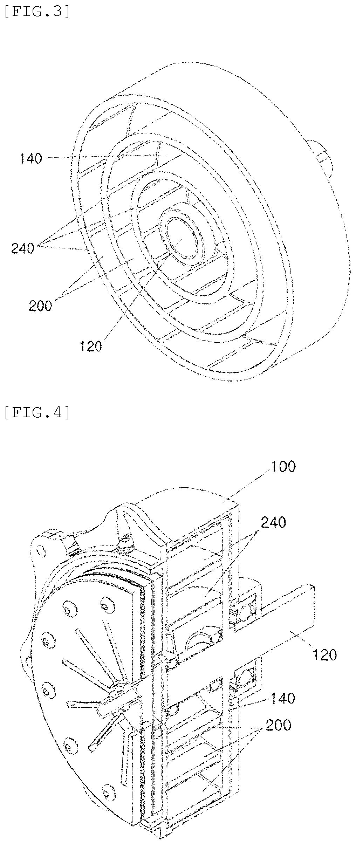

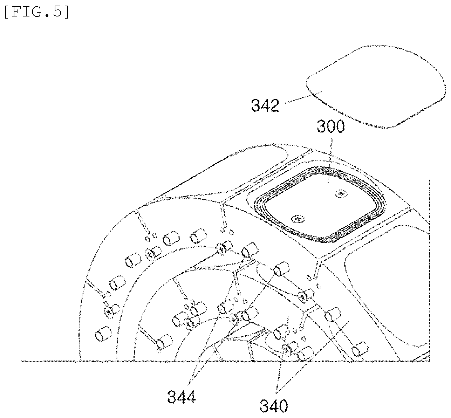

FIG. 1 is an exemplary diagram showing the appearance of a motor according to the present disclosure, FIG. 2 is an example diagram showing the disposition relationship between stators and rotors in the motor according to the present disclosure, FIG. 3 is an example diagram showing the coupling relationship between the rotor and the rotating shaft according to the present disclosure, FIG. 4 is a sectional view showing the rotor according to the present disclosure installed in the housing, and FIG. 5 is an exemplary diagram showing a state in which the stators according to the present disclosure are installed on the stator frames.

As shown, the layered motor according to the present disclosure has stators 300 and rotors 200 installed inside a housing 100, and the rotors 200 are connected to a motor shaft 120 and rotate due to the electromagnetic interaction between the stators 300 and the rotors 200, thereby rotating the motor shaft 120. Such a layered motor is configured to obtain rotational driving force according to the rotation of the motor shaft 120, and the basic principle of obtaining rotational driving force through electromagnetic interaction between the stator 300 and the rotor is no different from that of a general electric motor.

The stators 300 are disposed along the circumferential direction inside the housing 100. Similarly, the rotors 200 are also disposed along the circumferential direction inside the housing, and the individual stator 300 and rotor 200 are adjacent to each other and have a predetermined gap. The rotors 200 are provided such that no physical interference occurs with the stators 300 when rotated.

In the present disclosure, the stator 300 may be provided in a structure in which a wire is wound around a core to receive electricity and generate an induced current, and the rotor may be provided by disposing a plurality of magnets at regular intervals.

Meanwhile, in the present disclosure, a plurality of stators 300 and rotors 200 is provided and disposed alternately to provide a plurality of tiers, that is, a plurality of layers. One layer is provided with one set composed of one stator 300 and one rotor 200, and a plurality of such layers is provided.

The above configuration is structured such that the stator 300 is disposed inside the rotor 200. In more detail, the rotor 200 is disposed on the outermost side, the stator 300 is disposed at the inner side of the rotor 200, and the rotor 200 and the stator 300 are alternately disposed again. At this time, all rotors 200 are provided to be connected to the motor shaft 120, thereby rotating simultaneously by interacting with the stators 300 to provide rotational force to the motor shaft 120.

According to the above configuration, the plurality of rotors 200 is affected by the plurality of stators 300 and generates rotational force simultaneously, making it possible to obtain a large output. In other words, it implements the same function as if multiple motors were combined into a single unit. In particular, since the rotors 200 and the stators 300 are alternately disposed, some of the rotors 200 are affected by the two stators 300 that are disposed above and below the corresponding rotor 200, thereby maximizing efficiency and realizing strong rotational force. Accordingly, though being reduced in size, the motor may implement much greater output compared to a conventional motor of the same size.

Here, a configuration in which the plurality of rotors 200 is simultaneously connected to the motor shaft 120 may be achieved through a disk-shaped fixing plate 140. That is, the configuration is structured in such a way that the disk-shaped fixing plate 140 is fixed to one edge of the motor shaft 120 inside the housing 100, wherein on one surface of the fixing plate 140, rotor frames 240 are provided to install the rotors 200 therein, respectively.

The rotor frames 240 are provided along the circumferential direction on one surface of the fixing plate 140. Here, the rotor frames 240 provide concentric circles with different diameters centered on the motor shaft 120 and are provided in a plurality of layers. Such rotor frames 240 are each provided with a space where the rotor 200 may be installed, and the rotor 200 is installed in the space, whereby the plurality of the rotors 200 is disposed centered on the motor shaft 120 like tree rings.

With the plurality of rotors 200 provided in layers on the fixing plate 140 according to the above, the rotors 200 are provided sequentially at regular intervals, starting from the rotor 200 provided on the outermost side, whereby a space is provided between adjacent rotors 200. By disposing the stator 300 in this space, the rotors 200 and the stators 300 are naturally provided alternately.

The stator 300 according to the present disclosure may be installed on the stator frame 320 as shown in FIG. 5. The stator frames 320 are provided along the circumferential direction with one side fixed to the wall of the housing 100 and are provided in a plurality of numbers providing concentric circles with different diameters centered on the motor shaft 120. The diameters of such stator frames 320 are determined so that the stator frames 320 may be disposed alternately with the rotor 200, and a plurality of the diameters is provided into a structure like tree rings. The stator frame 320 provided in this way has a space where each stator 300 may be installed, and the space is sealed with a lid 342.

Meanwhile, cooling oil holes 344 are provided in the stator frame 320 to allow cooling oil to flow into the space where each of the stators 300 is installed. The cooling oil holes 344 are configured to communicate with the space where each of the stators 300 is installed and to be provided to extend to the outside of the housing 100 to circulate the cooling oil.

The above structure results in a structure in which each of the stators 300 is installed in a space accommodating itself. In that configuration, each of the stators 300 may be individually cooled by the cooling oil. In this way, each of the stators 300 may be cooled in an individual space, so cooling performance may be maximized.

**<Description of the Reference Numerals in the Drawings>**

| | | | |
|---|---|---|---|
| 100: | Housing | 120: | Rotating shaft |
| 140: | Fixing plate | 200: | Rotor |
| 240: | Rotor frame | 300: | Stator |
| 320: | Stator frame | 342: | lid |
| 344: | cooling oil hole | | |

## Claims

1. A layered motor, in which stators (300) are disposed along a circumferential direction inside a housing (100), and rotors (200) are disposed along a circumferential direction adjacent to the stators (300),
wherein the rotors (200) are connected to a motor shaft (120) and rotate due to the electromagnetic interaction between the stators (300) and the rotors (200), thereby rotating the motor shaft (120), and
the stators (300) and the rotors (200) are each disposed in a plurality of layers alternating with each other in the circumferential direction.

2. The layered motor of claim 1, wherein the rotors (200) are provided in a plurality of concentric circles with different diameters centered on the motor shaft (120) on one surface of a disk-shaped fixing plate (140) fixed to the motor shaft (120), thereby providing the plurality of layers.

3. The layered motor of claim 1, wherein the stator (300) is structured to be disposed at the inner side of the rotor (200), and the rotors (200) and the stators (300) are disposed alternately.

4. The layered motor of claim 1, wherein the stator (300) is installed in a stator frame (320), wherein a space is provided in the stator frame (320) to individually accommodate the stator (300) and cooling oil holes (344), to distribute cooling oil into the space, are provided in the stator frame (320), whereby the stator (300) may be individually cooled.
